# EUROPÄISCHE PATENTSCHRIFT

(11) **EP 0 968 816 B1**
(45) Veröffentlichungstag und Bekanntmachung des Hinweises auf die Patenterteilung: **30.08.2006**
(21) Anmeldenummer: 99111879.5
(22) Anmeldetag: 21.06.1999
(51) Int. Cl.: B32B 27/32, B32B 7/12, C08J 5/12

(54) **Extrusionsbeschichtete Folie**
Extrusion coated foil
Feuille revêtue par extrusion

(30) Priorität: 29.06.1998 DE 19828867
(43) Veröffentlichungstag der Anmeldung: 05.01.2000
(73) Patentinhaber: Topas Advanced Polymers GmbH, 65926 Frankfurt am Main (DE)
(72) Erfinder: Beer, Ekkehard, Dr., 65307 Bad Schwalbach (DE); Hatke, Wilfried, Dr., 65719 Hofheim (DE)
(74) Vertreter: Ackermann, Joachim

(56) Entgegenhaltungen:
- EP-A- 0 570 188
- EP-A- 0 649 737
- EP-A- 0 773 102
- EP-A- 0 920 989

## Beschreibung

Die vorliegende Erfindung betrifft eine extrusionsbeschichtete Folie, ein Verfahren zur Herstellung einer extrusionsbeschichteten Folie und deren Verwendung als Verpackungsmaterial.

Zur Herstellung von Verpackungen mit hohen Anforderungen werden flexible Folien unter Einwirkung von Wärme und Druck mit mechanischem Stempel bei Über-und/oder Unterdruck schalen- oder napfartig geformt. Die Folie dient zuerst als Schutz des Füllgutes. Die Folie muß das Füllgut vor Umwelteinflüssen schützen. Die Folie muß daher eine hohe Wasserdampf-, Gas- und UV-Barriere aufweisen. Die Folie muß eine mechanische Stabilität aufweisen, um das Füllgut vor physischen Einflüssen zu schützen und um nicht selbst vom Füllgut beschädigt zu werden. Das Füllgut darf durch Abgabe von Eigenbestandteilen die Folie nicht beeinträchtigen.

Als Verpackung für verschiedenste Gegenstände werden immer häufiger Blisterverpackungen gewählt, da diese Verpackungsform vielfältige Gestaltungsmöglichkeiten bietet und einem mechanisierten Verpackungsprozess entgegen kommt. Ausgangsmaterial für eine Blisterverpackung ist eine thermisch verformbare Folie. Es handelt sich dabei um Kunststoffolien, die durch Erwärmen in einen Zustand gebracht werden in welchem sie sich relativ leicht durch Anwendung von pneumatischem Über- oder Unterdruck oder durch Stempel verformen lassen. Durch geeignete Wahl der Formwerkzeuge lassen sich so Vertiefungen (Blister) in die Folie (Bodenfolie) einbringen, die der Gestalt des zu verpackenden Gegenstandes angepaßt werden können. Nach diesem Verformungsschritt wird der zu verpackende Gegenstand in den entstandenen Blister eingebracht. Nach dem Befüllen des Blisters wird auf die Bodenfolie eine Abdeckfolie aufgebracht, die den zu verpackenden Gegenstand in seinem Blister einschließt.

Die Erforderlichen Eigenschaften einer Folie werden durch verbinden von mehr als einer Materiallage zu einer Mehrschichtfolie erreicht, wenn die Gesamtanforderungen durch ein Material nicht abgedeckt werden können. Folien hergestellt aus Cycloolefincopolymeren weisen eine sehr gute Wasserdampfdichte auf. Diese Folien weisen aber eine schlechte Fettbeständigkeit auf. Es kommt zur Bildung von Spannungsrißkorrosion durch die Einwirkung von ungesättigten Fettsäuren.

Die am häufigsten verwendete Folie in Blisterverpackungen ist Polyvinylchlorid (PVC). Zur Erhöhung der Barrierewirkung gegen Gase, insbesondere Wasserdampf wird die PVC Bodenfolie häufig mit PVDC beschichtet. Folien aus unorientierten Polypropylen (uPP) bieten eine bessere Wasserdampfsperrwirkung als PVC-Folien und sind unter ökologischen Gesichtspunkten unbedenklicher. Der Nachteil ist jedoch die schlechtere Tiefziehbarkeit und der höhere Schrumpf dieses Materials.

Die in EP-A-570 188 und EP-A-631 864 beschriebenen COC Mono- oder Multischichtfolien als Bodenfolie ermöglichen gute Verarbeitung und gute Barriereeigenschaften. In der EP-A-649 737 werden Mehrschichtfolien aus Cycloolefincopolymeren (COC) und Olefincopolymeren u.a. Polyethylen (PE) oder Polypropylen beschrieben. Die erfindungsgemäße Auswahl der COC-Schicht und einer PE-Schicht und die besondere Auswahl der einzelnen Schichtdicken zueinander wird jedoch nicht offenbart.

Die EP-A-773 102 beschreibt eine extrusionsbeschichtete Verbundfolie, die eine Schicht aus COC, Klebschicht und PE-Schicht aufweist. Die erfindungsgemäße Laminierung einer dünnen PE-Schicht direkt auf die COC-Schicht wird nicht beschrieben.

Neuere Entwicklungen auf dem Gebiet der Blisterverpackungen für Arzneimittel beschreiben die Verwendung von amorphen Polyolefinen, die sich durch gutes Verarbeitungsverhalten und hohe Barrieren gegen Wasserdampf auszeichnen. So beschreiben EP-A-570 188 und EP-A-631 864 die Verwendung von Polyolefinen mit cyclischen Olefinen als Polymerbaustein. In diesen Anmeldungen wird die Verwendung dieser Polyolefine (Cycloolefincopolymere oder abgekürzt COC) in Form von Mono-oder Multischichtfolien für Blisterverpackungen beschrieben.

Die Blisterverpackung bietet neben der automatisierten Verpackung und Präsentation des im Blister geschützten Produktes, wie Arzneimitteln in Form von Tabletten, Kapseln oder ähnlichem die Möglichkeit das Einwirken von Luftfeuchtigkeit und Sauerstoff wesentlich zu reduzieren und so die Lagerzeiten zu erhöhen.

Aufgabe der vorliegende Erfindung war es, eine Folie mit hohen Barriereeigenschaften, sehr gutem Tiefziehverhalten guter Fettbeständigkeit und sehr guter Verbundfestigkeit bereitzustellen, sowie ein wirtschaftliches und umweltschonendes Verfahren zu deren Herstellung sowie deren Verwendung zur Herstellung von Blisterverpackungen.

Die Aufgabe der vorliegenden Erfindung wird gelöst durch die erfindungsgemäße extrusionsbeschichtete Folie, enthaltend mindestens eine Cycloolefincopolymer enthaltende Folie mit einer Dicke im Bereich von 180 bis 400 µm und mindestens auf einer Seite darauf extrusionsbesichteten, thermoplastische Folie aus Polyethylen mit einer Dicke im Bereich von 5 bis 30 µm.

Die Technik der Extrusionsbeschichtung umfaßt die Herstellung von Mehrschichtfolien, indem ein thermoplastischer Kunststoff durch Extrusion aus der Schmelze auf eine vorgefertigte Folienbahn aufgebracht wird.

Die zur Extrusionsbeschichtung eingesetzte Folienbahn kann eine Solofolie sein, daher aus einer einheitlichen Schicht bestehen oder aber bereits eine Verbundfolie darstellen.

Als thermoplastische Kunststoffe können leicht extrudierbare Produkte, vor allem Polyethylene, Ionomere oder Ethylen-Vinylacetat-Copolymere eingesetzt werden. Erfindungsgemäß wird Polyethylen und besonders bevorzugt LDPE eingesetzt. Diese Materialien weisen eine gute Verbundhaftung auf, wodurch ein späteres Delaminieren verhindert wird.

Die Folie weist bei einer relativen Feuchte von etwa 85% und einer Temperatur von etwa 23 °C eine Wasserdampfpermeation von ≤ 0,05 g/m²d, eine Durchstoßfestigkeit von≤ 20 N und eine Dicke von ≤ 100 µm auf.

Die im Sinne der Erfindung geeigneten Folien enthalten mindestens ein Cycloolefinpolymer ausgewählt aus Polymeren enthaltend 0,1 - 100 Gew.-%, bevorzugt 10 - 90 Gew.-%, bezogen auf die Gesamtmasse des Cycloolefinpolymers, polymerisierte Einheiten mindestens eines cyclischen Olefins der Formeln I, II, II', III, IV, V oder VI 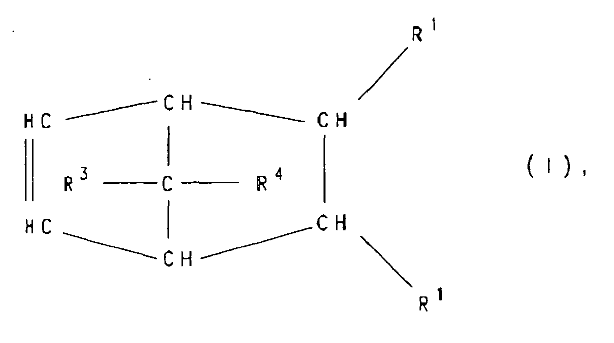 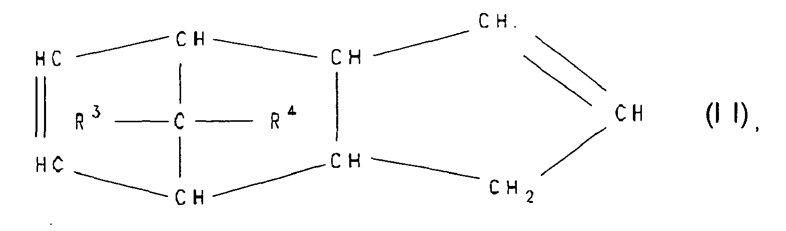 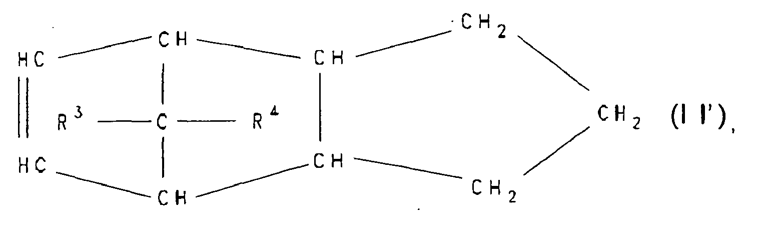 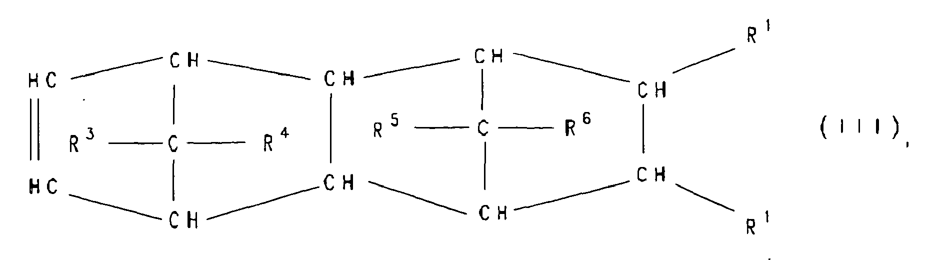 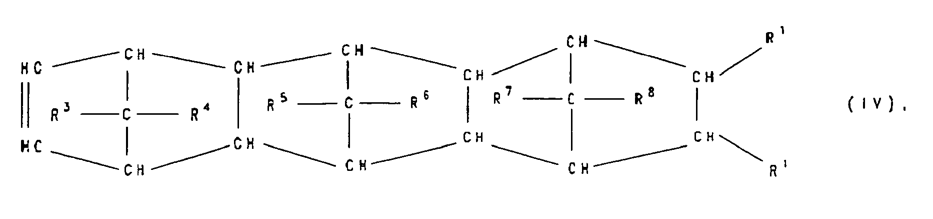 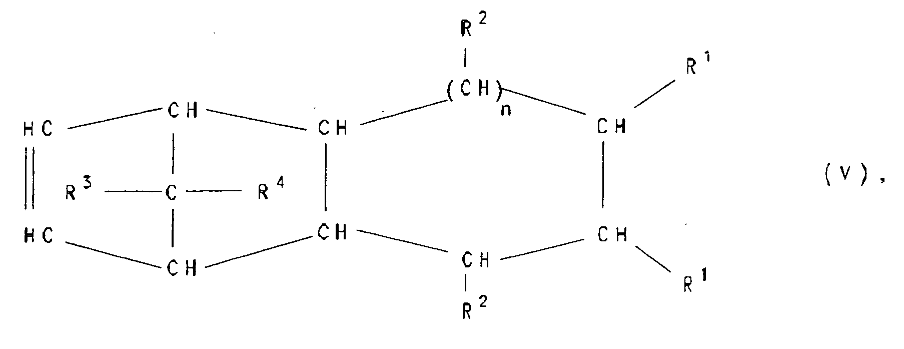 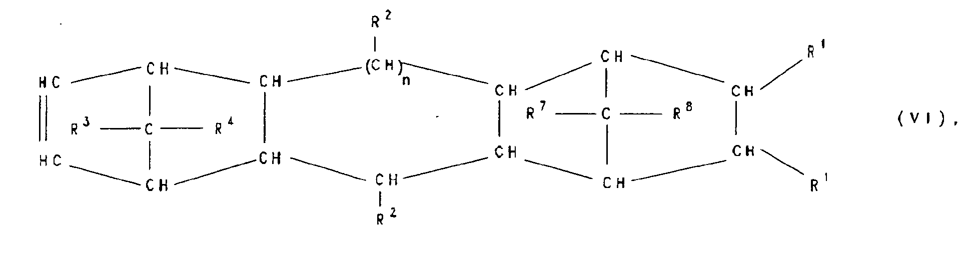 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und
0 bis 99,9 mol-%, bezogen auf die Gesamtzusammensetzung des Cycloolefincopolymers, polymerisierte Einheiten, welche sich ableiten von einem oder mehreren acyclischen Olefinen der Formel VII 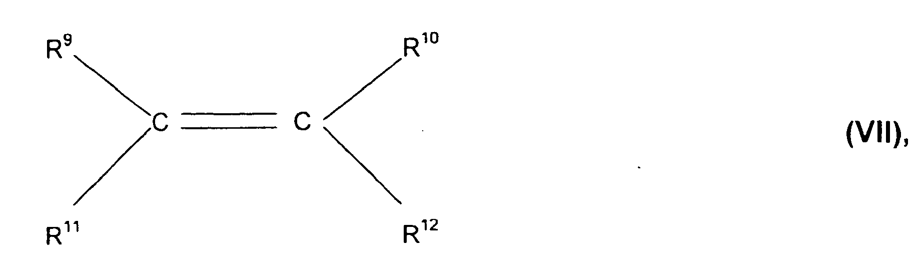 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

Die Cycloolefincopolymere können auch durch ringöffnende Polymerisation mindestens eines der Monomere mit den Formeln I bis VI und anschließender Hydrierung der erhaltenen Produkte erhalten werden.

Außerdem kann das erfindungsgemäße elastomeren Cycloolefincopolymer 0 bis 45 mol-%, bezogen auf die Gesamtzusammensetzung des Cycloolefincopolymers, polymerisierte Einheiten enthalten, welche sich ableiten von einem oder mehreren monocyclischen Olefinen der Formel VIII 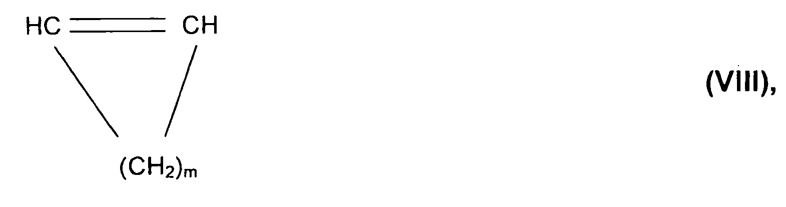 worin m eine Zahl von 2 bis 10 ist.
Der Anteil der polymerisierten Einheiten, die sich ableiten von cyclischen, insbesondere polycyclischen Olefinen beträgt bevorzugt 3 bis 75 mol-% bezogen auf die Gesamtzusammensetzung des Cycloolefincopolymers. Der Anteil der polymerisierten Einheiten, die sich ableiten von acyclischen Olefinen beträgt bevorzugt 5 bis 80 mol-% bezogen auf die Gesamtzusammensetzung des Cycloolefincopolymers.

Bevorzugt bestehen die Cycloolefincopolymere aus polymerisierten Einheiten, die sich ableiten von einem oder mehreren polycyclischen Olefinen, insbesondere polycyclischen Olefinen der Formeln I oder III, und polymerisierten Einheiten, die sich ableiten von einem oder mehreren acyclischen Olefinen der Formel VII, insbesondere α-Olefinen mit 2 bis 20 C-Atomen. Insbesondere sind Cycloolefincopolymere bevorzugt, die aus polymerisierten Einheiten bestehen, die sich ableiten von einem polycyclischen Olefin der Formel I oder III und einem acyclischen Olefin der Formel VII. Weiterhin bevorzugt sind Terpolymere, die aus polymerisierten Einheiten bestehen, die sich ableiten von einem polycyclischen Monoolefin der Formel I oder III, einem acyclischen Monoolefin der Formel VII und einem cyclischen oder acyclischen Olefin, welches mindestens zwei Doppelbindungen enthält (Polyen), insbesondere cyclische, bevorzugt polycyclische Diene wie Norbornadien oder cyclische, besonders bevorzugt polycyclische Alkene, die einen C₂-C₂₀-Alkenylrest tragen wie Vinylnorbornen.

Bevorzugt enthalten die erfindungsgemäßen elastomeren Cycloolefincopolymere Olefine mit Norbornengrundstruktur, besonders bevorzugt Norbornen, Tetracyclododecen und gegebenenfalls Vinylnorbornen oder Norbornadien. Bevorzugt sind auch Cycloolefincopolymere, die polymerisierte Einheiten enthalten, die sich ableiten von acyclischen Olefinen mit endständigen Doppelbindungen wie α-Olefinen mit 2 bis 20 C-Atomen, besonders bevorzugt Ethylen oder Propylen. Besonders bevorzugt sind Norbornen/Ethylen- und Tetracyclododecen/Ethylen-Copolymere.

Bei den Terpolymeren sind besonders bevorzugt Norbornen/Vinylnorbonen/ Ethylen-, Norbornen/Norbornadien/Ethylen-, Tetracyclododecen/Vinylnorbornen/ Ethylen-, Tetracyclododecen/Vinyltetracyclododecen/Ethylen-Terpolymere. Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 0 bis 99,9 mol-%, bevorzugt 5 bis 80 mol-%, bezogen auf die Gesamtzusammensetzung des Cycloolefincopolymers. In den beschriebenen Terpolymeren liegt der Anteil des polycyclischen Monoolefins bei 0,1 bis 99,9 mol-%, bevorzugt 3 bis 75 mol-%, bezogen auf die Gesamtzusammensetzung des Cycloolefincopolymers.

Das erfindungsgemäße Cycloolefincopolymer enthält vorzugsweise mindestens ein Cycloolefincopolymer, welches polymerisierte Einheiten enthält, die sich ableiten lassen von polycyclischen Olefinen der Formel I, und polymerisierte Einheiten, die sich ableiten lassen von acyclischen Olefinen der Formel VII.

Die erfindungsgemäßen Cycloolefincopolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen elastomeren Cycloolefincopolymere geeignet sind, sind beschrieben in EP-A-407 870, EP-A-485 893 und EP-A-503 422.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid,
rac-Isopropyliden-bis-(1-indenyl)zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid, 4-(η⁵⁻cyclopentadienyl)-4,7,7-trimethyl-(η⁵-4,5,6,7-tetrahydroindenyl-zirkondichlorid,
[4-(η⁵-cyclopentadienyl)-4,7,7-triphenyl-(η⁵-4,5,6,7-tetrahydroindenyl)]zirkondichlorid, [4-(η⁵-cyclopentadienyl)-4,7-dimethyl-7-phenyl-(η⁵-4,5,6,7-tetrahydroindenyl)]zirkondichlorid,
[4-(η⁵-3'-tert.-butylcyclopentadienyl)-4,7,7-triphenyl-(η⁵-4,5,6,7-tetrahydroindenyl)]zirkondichlorid,
[4-(η⁵-3'-tert.-butylcyclopentadienyl)-4,7-dimethyl-7-phenyl-(η⁵-4,5,6,7-tetrahydroindenyl)]zirkondichlorid,
[4-(η⁵-3'-methylcyclopentadienyl)-4,7,7-trimethyl-(η⁵-4,5,6,7-tetrahydroindenyl)]zirkondichlorid,
[4-(η⁵-3'-methylcyclopentadienyl)-4,7,7-triphenyl-(η⁵-4,5,6,7-tetrahydroindenyl)]zirkondichlorid,
[4-(η⁵-3'-methylcyclopentadienyl)-4,7-dimethyl-7-phenyl-(η⁵-4,5,6,7-tetrahydroindenyl)]zirkondichlorid,
[4-(η⁵-3'-isopropylcyclopentadienyl)-4,7,7-trimethyl-(η⁵-4,5,6,7-tetrahydroindenyl)]zirkondichlorid,
[4-(η⁵-3'-isoproplycyclopentadienyl)-4,7,7-triphenyl-(η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-(η⁵-cyclopentadienyl)(η⁵-4,5-tetrahydropentalen)]zirkondichlorid,
[4-(η⁵-cyclopentadienyl)-4-methyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-3'-methyl-cyclopentadienyl)(η⁵-4,5-tetrahydropentalen)]zirkondichlorid,
[4-(η⁵-3'-isopropylcyclopentadienyl)(η⁵-4,5-tetrahydropentalen)]zirkondichlorid,
[4-(η⁵-3'-benzyl-cyclopentadienyl)(η⁵-4,5-tetrahydropentalen)]zirkondichlorid,
[2,2,4Trimethyl-4-(η⁵-cyclopentadienyl)-(η⁵-4,5-tetrahydropentalen)]-zirkoniumdichlorid,
[2,2,4Trimethyl-4-(η⁵-(3,4-Di-isopropyl)cyclopentadienyl)-(η⁵-4,5-tetrahydropentalen)]-zirkoniumdichlorid.

Die erfindungsgemäß verwendeten COC-Folien zeichnen sich durch spezielle mechanische Eigenschaften aus. Die Folien können auf den verwendeten Maschinen verarbeitet werden und besitzen gleichzeitig eine geringe Durchstoßfestigkeit und eine hohe Barriere, vor allem gegen Wasserdampf. Diese COC-Folien, sind in geeigneter Weise unorientiert. Dabei kann es sich um Mono- oder Mehrschichtfolien handeln. Die Folien können organische oder anorganische Füllstoffe enthalten, um die Lichtdurchlässigkeit zu verringern damit das Füllgut nicht sichtbar zu machen (kindersichere Verpackung) oder die Bedruckbarkeit oder die Siegeleigenschaften zu verbessern.

Die Herstellung der Cycloolefincopolymere geschieht durch eine heterogene oder homogene Katalyse mit metallorganischen Verbindungen und ist in einer Vielzahl von Patenten beschrieben. Katalysatorsysteme basierend auf Mischkatalysatoren aus Titansalzen und Aluminiumorganylen werden in DD-A-109 224 und DD-A-237 070 beschreiben. EP-A-156 464 beschreibt die Herstellung mit Katalysatoren auf Vanadiumbasis. EP-A-283 164, EP-A-407 870, EP-A-485 893 und EP-A-503 422 beschreiben die Herstellung von Cycloolefinpolymeren mit Katalysatoren basierend auf löslichen Metallocenkomplexen.

Extrudierte nicht orientierte COC-Folien sind spröde und lassen sich unter erschwerten Bedingungen nur sehr schlecht weiterverarbeiten, vgl. DE-A-4304309. So neigen sie dazu beim Aufwickeln bzw. Abwickeln unter Zug leicht einzureißen oder zu zerreißen. Aus diesem Grund muß die mechanische Festigkeit erhöht werden. Dies kann durch Orientieren (mono- oder biaxiale Reckung) der Folien geschehen. Die so orientierten Folien lassen sich wesentlich besser handhaben, ohne daß sie die geschilderten Nachteile aufweisen wie in DE-A-4304309 beschreiben. Die Durchstoßfestigkeit von orientierten Folien wurde nach DIN 53373 untersucht. Als Maß für die Durchstoßfestigkeit kann unter anderem die Durchstoßarbeit herangezogen werden. Es wurde nun festgestellt, daß mit der Orientierung die Durchstoßfestigkeit der Folien zunimmt. Die gemessenen Werte waren ausnahmslos größer als die der nicht orientierten Folien vergleichbarer Dicke. In DE-A-4414669 wird ein Wert von 450 N/mm als zu hoch für einen sinnvollen Einsatz der Folie als Abdeckfolien für Blisterverpackungen angegeben. Auf Blistermaschinen für empfindliche Arzneimittel sollten wesentlich niedrigere Werte angestrebt werden. Als eine erste Orientierung können die Werte der Durchstoßfestigkeiten für Aluminiumfolien herangezogen werden. Die Durchstoßfestigkeit einer Aluminiumfolie (16 µm) liegt bei 90 N/mm. Eine leichte Entnahme der Arzneimittel aus den Blisterverpackungen ist bei Verwendung von orientierten COC-Folien deshalb nicht mehr gewährleistet.

Neben einer optimalen aber nicht zu niedrigen Duchstoßfestigkeit muß die Blisterfolie eine erhöhte Zähigkeit aufweisen. Erst die gezielte Abstimmung von mechanischer Festigkeit (Härte), Flexibilität und erforderlicher Kraft zum Zusammendrücken des Näpfchens ermöglicht es das Füllgut, wie Tablette, Kapsel, Zäpfchen oder Dragee ohne Beschädigung und unnötigen Kraftaufwand aus der Verpackung herauszulösen. Der geringe Kraftaufwand ist insbesondere für die Verwendung bei älteren Menschen sowie im Klinikbereich gefordert, wo das medizinische Personal fortlaufend Tabletten durchdrücken muß und es zu Ermüdungserscheinung und Muskelkater in den Fingern kommen kann.

Die Wasserdampfsperrwirkung der Folien ist vergleichbar mit den Werten wie sie für unverstreckte COC-Folien beobachtet werden. Die Orientierung hat daher keinen deutlichen Einfluß auf die Barrierewirkung der Folien. Die Dicken der durch Extrusionsbeschichtung aufgebrachten Materiallage auf der Basis von COC-Folien sollten deshalb im Bereich der Dicken der Folien im ausgeformten Blister liegen. Damit ergeben sich Dicken für die aufextrudierten Materialschichten im Bereich von 1 bis 150 µm, bevorzugt im Bereich von 5 bis 30 µm.

Die Wasserdampfsperrwirkung wird durch die Zugabe von organischen oder anorganischen Zusätzen nicht signifikant beeinflußt. Sie liegt im Bereich von 0,2 bis 0,4 g/m^{2*}d für eine Foliendicke von 100 µm. Die Polarität der Oberfläche kann durch eine Koronabehandlung der Folie erhöht werden.

Bei den Zusätzen kann es sich um organische Polymere wie Polypropylen oder Polyethylen als Homo- oder Copolymere, Polyester, Polyamide, Polycarbonat, Polyacetale, Acrylat- und Methacrylatpolymere handeln. Als anorganische Pigmente können Titandioxid, Bariumsulfat, Calciumsulfat, Calciumcarbonat oder Bariumcarbonat eingesetzt werden.

Die COC-Folie kann ein oder beidseitig mit Materialien extrusionsbeschichtet werden, die ein Polymer wie Polyethylen (PE) enthalten. Die Dicke der auf der COC-Folie extrusionsbeschichteten PE-Materiallage beträgt 5 µm bis 30 µm und bevorzugt 8 µm bis 12 µm.

Die Dicke der COC-Folie beträgt 180 µm bis 400 µm und bevorzugt 200 µm bis 300 µm.
Ein weiterer Gegenstand der Erfindung ist ein Verfahren zur Herstellung der erfindungsgemäßen extrusionsbeschichteten Folie, wobei die auf der Cycloolefincopolymer enthaltenden Folie extrusionsbeschichtete thermoplastische Folie mittels Extrusionsbeschichtung aufgebracht wird.

Die erfindungsgemäße extrusionsbeschichtete Folie wird zur Herstellung von Blisterverpackungen verwendet. Aufgrund der sehr guten Wasserdampfbarriere erhöht die daraus hergestellte Blisterverpackung oder PTP (push through packaging) den Wert des darin verpackten Artikels. Es läßt sich darin Füllgut, wie Arzneimittel und Nahrungsmittel, insbesondere pelletisierte und gekapselte Arzneimittel, reishaltige Eßwaren, Kekse, Snacks, sowie wasseranziehende Artikel, wie Zigaretten und Teebeutel verpacken. Dabei bildet die mindestens einseitig aufextrudierte Polymerschicht den Schutz der COC-Grundfolie gegen Fette und erhöht damit die Beständigkeit und den Wert der Mehrschichtfolienausführung.

Die Erfindung wird anhand einer Zeichnung und Beispielen näher erläutert.

### Zeichnung

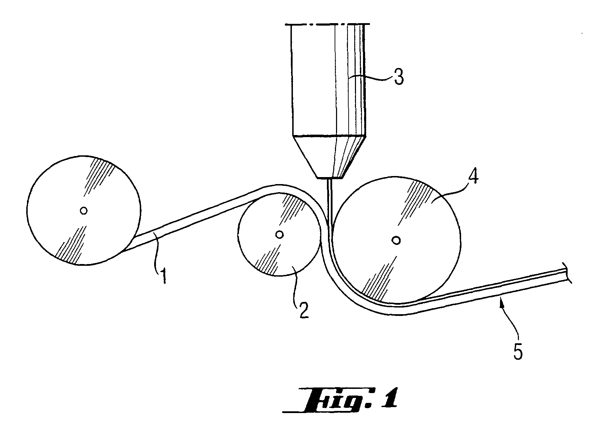

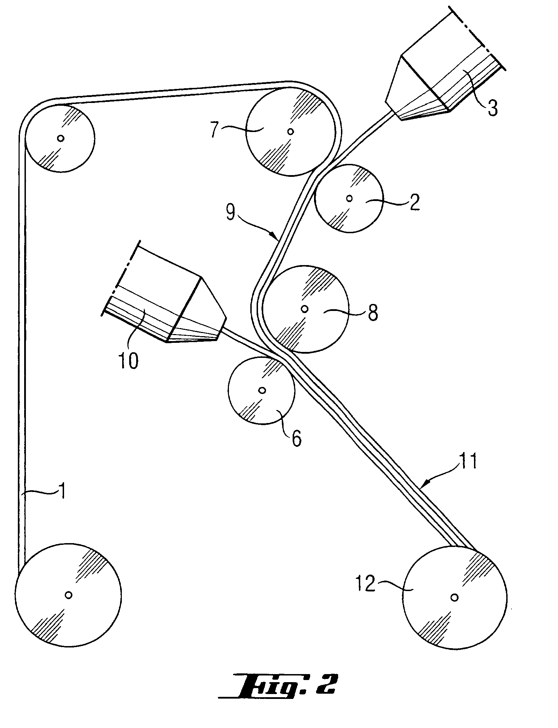

Die Zeichnung enthält Figuren 1 und 2. Es zeigen:
- Fig 1:: Aufbau einer Exrusionsbeschichtungsanlage zur Herstellung einer 2-lagigen Mehrschichtfolie,
- Fig 2:: Aufbau einer Exrusionsbeschichtungsanlage zur Herstellung einer 3-lagigen Mehrschichtfolie.

Die Extrusionsbeschichtungsanlage gemäß Fig. 1 enthält eine Folienträgerbahn (1), Anprellwalze (2), Düse (3), Rolle (4) und die fertige 2-lagige Mehrschichtfolie (5). An die Stelle der Folienträgerbahn kann eine Papier- oder Textilbahn treten. Es werden zweischichtige Verbunde erhalten. Dieser Verfahrensablauf ermöglicht es pro Maschinendurchgang jeweils eine Seite der Trägerfolienbahn mit einer Polymerschmelze zu beschichten. Es ist somit möglich in einem zweiten Maschinendurchgang auch die im ersten Schritt unbeschichtete Seite der Trägerfolie zu beschichten.

Die Extrusionsbeschichtungsanlage gemäß Fig. 2 enthält eine Folienträgerbahn (1), Anlegewalze (2), Düse (3), Umlenkwalze (6), Kühlwalze (7), Walze (8), Zweischicht-Folienbahn (9) Düse (10) die fertige 3-Schicht-Verbundfolie (11) und Aufrollung (12). Bei diesem Verfahren wird die Polymerschmelze in zwei aufeinander folgenden Beschichtungsschritten beidseitig auf die Trägerfolienbahn aufgebracht, wobei in einem Maschinendurchgang eine 3-Schicht-Folie gebildet wird.

### Beispiele

### Beispiel

Es wurde eine 300 m Rolle einer COC-Folie (Topas® Typ 8007) mit einer Dicke von 250 µm zunächst von einer Seite mit einer Dicke von 12 µm (11g/m²) mit LDPE (Dichte von 0,92 m/min) mittels einer Düse extrusionsbeschichtet. Dazu wurde die COC-Folie bei einer Temperatur von 310 °C bei einer Geschwindigkeit von 90 m/min mit einem Antrag von 12 g/m² extrusionsbeschichtet. Das Verfahren wurde gemäß Fig. 1 durchgeführt. Die einseitig extrusionsbeschichtete COC-Folie wurde auf der unbeschichteten Seite in einem zweiten Maschinendurchgang mittels des gleichen Antragssystems wie im ersten Durchgang mit selben LDPE bei einer Geschwindigkeit von 80 m/min und einer Temperatur von 320 °C extrusionsbeschichtet. Die extrusionsbeschichtete Folie wies eine Dicke von 274 µm auf.
Bei der Messung der Verbundfestigkeit der Mehrschichtfolie führte die hohe Verbundfestigkeit zu einem Abriß der LDPE-Folie. Die Verbundfestigkeit zwischen einer Folie aus reinem COC und LDPE ist daher hoch.

### Vergleichsbeispiel

Es wurde genauso verfahren wie im Beispiel nur mit dem Unterschied, daß die COC-Folie von beiden Seiten mit Polypropylen jeweils mit einer Dicke von 12 µm extrusionsbeschichtet wurde. Die extrusionsbeschichtete Folie wies eine Dicke von 274 µm auf. Der Polypropylen-Film konnte von der COC-Folie abgezogen werden ohne zu reißen. Die Verbundfestigkeit zwischen einer Folie aus reinem COC und Polypropylen ist daher niedrig.

## Patentansprüche

1. Extrusionsbeschichtete Folie enthaltend mindestens eine Cycloolefincopolymer enthaltende Folie und mindestens auf einer Seite darauf eine extrusionsbeschichtete, thermoplastische Folie, **dadurch gekennzeichnet, dass** die extrusionsbeschichtete, thermoplastische Folie eine Folie aus Polyethylen ist, die eine Dicke im Bereich von 5 bis 30 µm besitzt, und dass die Cycloolefincopolymer enthaltende Folie eine Dicke im Bereich von 180 bis 400 µm besitzt.

2. Extrusionsbeschichtete Folie nach Anspruch 1, **dadurch gekennzeichnet, dass** die Folie aus Polyethylen eine Dicke im Bereich von 8 bis 12 µm besitzt.

3. Extrusionsbeschichtete Folie nach Anspruch 1 oder 2, **dadurch gekennzeichnet, dass** die Folie aus Polyethylen beidseitig auf der Cycloolefincopolymer enthaltenden Folie angeordnet ist.

4. Verfahren zur Herstellung einer extrusionsbeschichteten Folie nach einem oder nach mehreren der Ansprüche 1 bis 3, wobei die extrusionsbeschichtete, thermoplastische Folie aus Polyethylen auf der Cycloolefincopolymer enthaltenden Folie mittels Extrusionsbeschichtung aufgebracht wird.

5. Verwendung einer extrusionsbeschichteten Folie nach einem oder nach mehreren der Ansprüche 1 bis 3 zur Herstellung von Blisterverpackungen.

## Claims

1. An extrusion-coated film comprising at least one film which comprises cycloolefin copolymer and comprising, extrusion-coated on at least one side of this film, a thermoplastic film, wherein the extrusion-coated, thermoplastic film is a film made from polyethylene, and has a thickness in the range from 5 to 30 µm, and wherein the film which comprises cycloolefin copolymer has a thickness in the range from 180 to 400 µm.

2. The extrusion-coated film as claimed in claim 1, wherein the film made from polyethylene has a thickness in the range from 8 to 12 µm.

3. The extrusion-coated film as claimed in claim 1 or 2, wherein the film made from polyethylene has been arranged on both sides of the film which comprises cycloolefin copolymer.

4. A process for producing an extrusion-coated film as claimed in one or more of claims 1 to 3, where extrusion-coating is used to apply the extrusion-coated thermoplastic film made from polyethylene on the film which comprises cycloolefin copolymer.

5. The use of an extrusion-coated film as claimed in one or more of claims 1 to 3 for producing blister packs.

## Revendications

1. Feuille revêtue par extrusion, contenant au moins une feuille contenant un copolymère de cyclo-oléfine et, sur au moins une face de celle-ci, une feuille thermoplastique revêtue par extrusion, **caractérisée en ce que** la feuille thermoplastique revêtue par extrusion est une feuille de polyéthylène ayant une épaisseur dans la plage de 5 à 30 µm et **en ce que** la feuille contenant un copolymère de cyclo-oléfine a une épaisseur dans la plage de 180 à 400 µm.

2. Feuille revêtue par extrusion selon la revendication 1, **caractérisée en ce que** la feuille de polyéthylène a une épaisseur dans la plage de 8 à 12 µm.

3. Feuille revêtue par extrusion selon la revendication 1 ou 2, **caractérisée en ce que** la feuille de polyéthylène est disposée sur les deux côtés de la feuille contenant un copolymère de cyclo-oléfine.

4. Procédé de production d'une feuille revêtue par extrusion selon l'une ou plusieurs des revendications 1 à 3, dans lequel la feuille thermoplastique en polyéthylène revêtue par extrusion est déposée sur la feuille contenant un copolymère de cyclo-oléfine par revêtement par extrusion.

5. Utilisation d'une feuille revêtue par extrusion selon l'une ou plusieurs des revendications 1 à 3 pour fabriquer des emballages blisters.
